**Europäisches Patentamt**

**European Patent Office**

**Office européen des brevets**

(19)

(11) Veröffentlichungsnummer : **0 020 856**
**B1**

(12) **EUROPÄISCHE PATENTSCHRIFT**

(45) Veröffentlichungstag der Patentschrift :
05.10.83

(21) Anmeldenummer : **80101092.7**

(22) Anmeldetag : **04.03.80**

(51) Int. Cl.³ : **G 06 F 11/10**

(54) **Verfahren und Anordnung zur automatischen Zugriffsoptimierung bei Speichern mit wahlfreiem Zugriff.**

(30) Priorität : **27.06.79 DE 2925966**

(43) Veröffentlichungstag der Anmeldung :
**07.01.81 Patentblatt 81/01**

(45) Bekanntmachung des Hinweises auf die Patenterteilung : **05.10.83 Patentblatt 83/40**

(84) Benannte Vertragsstaaten :
**FR GB NL**

(56) Entgegenhaltungen :
**IBM TECHNICAL DISCLOSURE BULLETIN Band 16, Nr. 10, März 1974, New York, US, F. TSUI : « Memory arrangement and operation for error correction without cycle-time prolongation », Seiten 3280-3281**

**IBM TECHNICAL DISCLOSURE BULLETIN, Band 19, Nr. 8, Januar 1977, New York, US, F.J. AICHELMANN JR. : « Error correction time bypassing technique », Seiten 3075-3076**

(73) Patentinhaber : **SIEMENS AKTIENGESELLSCHAFT**
**Berlin und München Wittelsbacherplatz 2**
**D-8000 München 2 (DE)**

(72) Erfinder : **Sprick, Erhard, Dipl.-Ing-**
**Lipowskystrasse 10**
**D-8000 München 70 (DE)**
Erfinder : **Kaiserswerth, Rudolf, Dipl.-Ing.**
**Leitzachstrasse 6/I**
**D-8000 München 90 (DE)**

Verfahren und Anordnung zur automatischen Zugriffsoptimierung bei Speichern mit wahlfreiem Zugriff.

Die Erfindung bezieht sich auf ein Verfahren zur automatischen Zugriffsoptimierung beim Lesen von Datenworten aus einem Speicher mit wahlfreiem Zugriff mit Fehlerkorrektureinrichtung und auf eine Anordnung zur Durchführung des Verfahrens.

Größere Speicher mit wahlfreiem Zugriff, wie beispielsweise Arbeitsspeicher von Datenverarbeitungsanlagen, werden derzeit praktisch ausnahmslos mit Einrichtungen zur Fehlerkorrektur ausgerüstet. Fehlerkorrektureinrichtungen sind in verschiedenen Ausführungen bekannt (vergl. z. B. DE-OS 25 49 392, DE-OS 26 57 826). Allen Fehlerkorrektureinrichtungen ist ein Syndromgenerator oder Syndromrechner gemeinsam, der aus dem in den Speicher einzuschreibenden Datenwort nach einem bestimmten Algorithmus, der dem verwendeten Korrekturcode zugrundeliegt, Prüfbits ableitet, die zusammen mit dem Datenwort in den Speicher eingegeben werden. Nach dem Lesen eines Datenworts aus dem Speicher werden nach der gleichen Vorschrift erneut Prüfbits abgeleitet und mit den aus dem Speicher gelesenen Prüfbits verglichen. Das Vergleichsergebnis wird als Syndrom bezeichnet und stellt eine Information über die Fehlersituation des gelesenen Datenworts dar. Es ist insgesamt Null, wenn das Datenwort fehlerfrei ist. Ein von Null abweichendes Syndrom deutet auf entstandene Fehler hin. Es hängt von der Art des benützten Korrekturcodes, insbesondere von dessen Redundanz, d. h. von der Zahl der dem ursprünglichen Datenwort hinzugefügten Prüfbits ab, wie viele Fehler in einem Datenwort noch korrigierbar sind und welche Zahl von Fehlern überhaupt noch festgestellt werden kann.

Durch die Literaturstelle « IBM Technical Disclosure Bulletin », Vol. 19, No. 8, Januar 1977, S. 3075 und 3076 ist es bekannt, zum Zweck einer möglichst frühzeitigen Verfügbarkeit von aus einem Datenspeicher mit assoziierter Fehlerkorrektureinrichtung gelesenen Daten ein Freigabesignal aus einem Signal « kein Fehler » nach einer nur kurzen Verzögerung und aus einem Signal « korrigierbarer Fehler » nach einer längeren, für die Datenkorrektur ausreichenden Verzögerung zu erzeugen.

Bei der Beurteilung aller Vorgänge im Zusammenhang mit einer Fehlerkorrektur bzw. Fehlererkennung muß berücksichtigt werden, daß die Wahrscheinlichkeit für das Vorliegen fehlerfreier Datenworte bei weitem am größten ist und die Wahrscheinlichkeit für das gleichzeitige Auftreten von Fehlern mit wachsender Fehlerzahl sehr rasch abnimmt.

Die Zugriffszeit bei einem Speicher ist definiert als die Zeitspanne zwischen dem Anliegen eines Lesestartsignals, das eine Leseoperation einleitet, und dem Erscheinen der Lesedaten, die durch ein Übergabesignal an der Nahtstelle gültig werden. Der Zeitpunkt für das Auftreten dieses Lesedaten-Gültigkeitssignals muß in der Regel auf den langsamsten Datenweg abgestellt werden, der sich aus mehreren Einzelkomponenten zusammensetzt, wovon die maximal mögliche Zugriffszeit für eine einzelne Speicherzelle innerhalb eines beliebigen Speicherbausteins unter den ungünstigsten Bedingungen und der maximale Weg für die Ansteuer- und Lesesignale die wichtigsten sind. Es ist klar, daß auf diese Weise sehr häufig Zeit verschenkt wird. Trotzdem wird eine individuelle Angleichung der Zugriffszeit an die bei einem konkreten Speicherexemplar tatsächlich vorliegenden Verhältnisse nur selten vorgenommen, weil bei einem gegebenenfalls notwendigen Austausch von Speichergruppen zumeist neue Abgleichmaßnahmen durchgeführt werden müßten.

Der Erfindung liegt die Aufgabe zugrunde, ein Verfahren zur automatischen Anpassung der zwischen dem Beginn des Lesestartsignals und der Freigabe eines Lesedatums erforderlichen Zeitspanne an den jeweils vorgegebenen, d. h. von der Adresse und den Umweltbedingungen abhängigen Datenweg und eine Anordnung zur Durchführung des Verfahrens anzugeben. Diese Aufgabe wird mit Hilfe der Merkmale im kennzeichnenden Teil des Anspruchs 1 gelöst. Eine entsprechende Anordnung ist durch die Merkmale des Anspruchs 3 beschrieben.

Die Erfindung wird im folgenden anhand der Zeichnung näher erläutert. Es zeigt darin

Figur 1 eine Übersicht über die für das Verfahren gemäß der Erfindung maßgeblichen Elemente,

Figur 2 die Darstellung des zeitlichen Ablaufs einiger Signale und die Häufigkeitsverteilung für das Eintreffen von Lesesignalen an der Speichernahtstelle,

Figur 3 eine Schaltungsanordnung zur Überwachung des Syndroms und zur Erzeugung des Lesedaten-Gültigkeitssignals,

Figur 4 ein Zeitdiagramm zur Erläuterung der Funktion der Schaltungsanordnung nach Fig. 3.

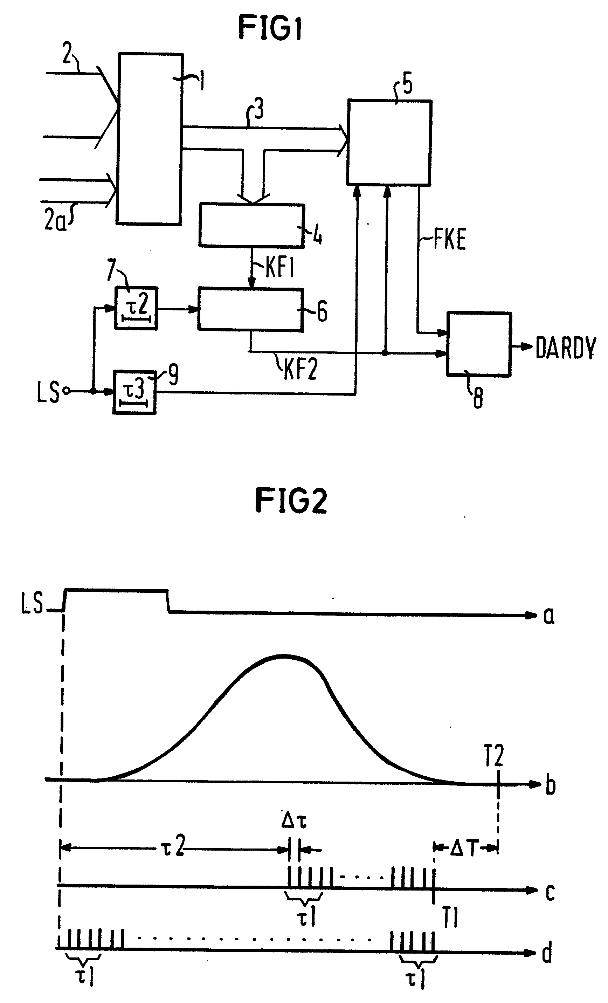

Die Fig. 1 zeigt einen Syndromgenerator 1, mit dessen Hilfe aus den über die Leitungsbündel 2 und 2a ankommenden Datenworten und Prüfbits in der schon eingangs angegebenen an sich bekannten Weise Fehlersyndrome erzeugt werden. Einzelheiten der Syndromerzeugung sind deshalb in Fig. 1 nicht dargestellt.

Die Syndrome werden über ein Leitungsbündel 3 sowohl einem Nulldetektor 4 als auch einer Analysier- und Decodierschaltung 5 zugeführt. Der Nulldetektor 4 stellt ein NOR-Glied mit einer der Anzahl der Syndrombits entsprechenden Anzahl von Eingängen dar. Am Ausgang des Nulldetektors 4 entsteht immer ein Bewertungssignal KF1 mit dem logischen Wert 1, wenn alle Bits des Syndroms Null sind, d. h. wenn das Syndrom insgesamt den Wert Null annimmt. Ein von Null verschiedenes Syndrom, das nur dann entsteht, wenn das gelesene Datenwort mindestens einen Fehler enthält, wird durch die Analysier- und Decodierschaltung 5 analysiert. Dabei wird zunächst festgestellt, ob es sich um korrigierbare oder nicht korrigierbare Fehler handelt. Im ersten Fall werden sogenannte Fehlerortsignale erzeugt, die in Verbindung mit einem in Fig. 1 nicht dargestellten Korrekturnetzwerk die Inversion der als gefälscht erkannten Bits innerhalb des gelesenen Datenworts bewirken.

Da die einzelnen Bits eines gelesenen Datenworts wegen der unterschiedlichen Datenwege nicht nur an der Speichernahtstelle, sondern auch am Nulldetektor 4 zu verschiedenen Zeitpunkten eintreffen, wird der Nulldetektor 4 zunächst Abweichungen vom Wert Null des Syndroms auch dann feststellen, wenn sich das gelesene Speicherwort letztlich als fehlerfrei erweist. Wenn also der Wert Null des Syndroms als Kriterium für die umgehende Datenfreigabe benutzt werden soll, muß ein Zeitpunkt abgewartet werden, in welchem der Wert des Syndroms voraussichtlich stabil bleibt. Es kann davon ausgegangen werden, daß die Datenwege zum Syndromgenerator und zur Speichernahtstelle etwa gleich sind.

Die Überwachung des Wertes Null des Syndroms bzw. des davon abhängigen Bewertungssignals KF1 wird durch eine Überwachungsschaltung 6 vorgenommen. Die Überwachungsschaltung 6 wird durch ein vom Lesestartsignal LS durch Verzögerung um die Zeit $\tau 2$ abgeleitetes Signal LS* angestoßen, worauf der Ablauf der festgelegten Zeitspanne $\tau 1$ beginnt. Die Überwachungsschaltung 6 ist so ausgelegt, daß der Ablauf der Abfragezeit $\tau 1$ immer erneut gestartet wird, wenn das Bewertungssignal KF1 innerhalb einer Zeitspanne $\tau 1$ mindestens einmal zwischen Null und Eins wechselt. Dabei muß berücksichtigt werden, daß am Ausgang des Nulldetektors 4 auch so kurze Impulse entstehen können, daß die nachfolgende Überwachungsschaltung nicht mehr darauf anspricht. Die Minimalzeit $\Delta\tau$ der noch verarbeiteten Impulse hängt von der speziellen Art der Überwachungsschaltung und von der eingesetzten Schaltungstechnik ab. Es hat sich als zweckmäßig erwiesen, für die Zeit $\Delta\tau$ die minimale Impulsdauer für das Rücksetzen eines Flip-Flops einzusetzen. Sie beträgt beispielsweise in der bekannten ECL-100k-Technologie 2,6 ns.

Es läßt sich abschätzen, daß bei einer einmaligen Abfrage des Syndroms über die Zeitspanne $\Delta\tau$ im statistischen Mittel mit $f = Z/_2 k$ Fehlentscheidungen je Sekunde zu rechnen ist, wobei z die Zahl der Speicherzugriffe pro sec und k die Zahl der die Redundanz im Korrekturcodewort bildenden Prüfbits ist. Geht man von $z = 300\,000$ Speicherzugriffen/sec und $k = 8$ Prüfbits (Einfachfehlerkorrektur bei 64 Datenbits) aus, dann ergibt sich die wahrscheinliche Anzahl von rund 1 200 Fehlentscheidungen/sec, was natürlich ein völlig unzureichender Wert ist. Es zeigt sich jedoch, daß die durchschnittlich zu erwartenden Fehlentscheidungen mit der Anzahl der Syndromabfragen je Speicherzugriff sehr rasch abnehmen. Mit i Abfragen ergibt sich

$$f = z/_{(2}k_{)}i$$

Mit den vorher benutzten Werten für z und k beträgt bei $i = 6$ Abfragen die Wahrscheinlichkeit für eine Fehlentscheidung/sec $1,06 \cdot 10^{-9}$. Das entspricht einer Fehlentscheidung in 30,3 Jahren. Mit $k = 15$ Prüfbits, die für eine Doppelfehlererkennung in einem Datenwort mit 64 Bits benötigt werden, erreicht man annehmbare Werte für die Wahrscheinlichkeit von Fehlentscheidungen schon mit weniger, z. B. mit $i = 3$ Abfragen des Syndroms je Speicherzugriff. Man hat dann mit einer Fehlentscheidung in 3,85 Jahren zu rechnen.

Die Überwachung des Syndroms bzw. Bewertung des Signals KF1 kann durch wiederholte Einzelabtastungen oder kontinuierlich erfolgen. Bei der wiederholten Einzelabtastung beginnt die Zählung der Abtastungen von neuem, wenn bei den beiden letzten Abtastungen verschiedene Werte des Syndroms ermittelt werden. Für die schon erwähnte Zeitspanne $\tau 1$ bei einer kontinuierlichen Abfrage gilt $\tau 1 = 1 \cdot \Delta\tau$. Mit den bereits genannten Werten für i und $\Delta\tau$ errechnet sich daraus $\tau 1 = 15,6$ ns bzw. $\tau 1 = 7,8$ ns.

Den ersten Start für die Abfragezeit $\tau 1$ wird man vorteilhaft ungefähr in einen Zeitpunkt verlegen, in dem die Lesedatensignale mit der größten Wahrscheinlichkeit an der Speichernahtstelle eintreffen und der um die Zeitspanne $\tau 2$ gegenüber dem Beginn des Lesestartsignals LS verspätet ist. Dieser Zeitpunkt entspricht der Lage des Maximums im Kurvenverlauf nach Zeile b in Fig. 2. Der Kurvenverlauf zeigt die Wahrscheinlichkeit für das Eintreffen von Lesedatensignalen in Abhängigkeit von der Zeit, die seit dem Beginn des Lesestartsignals LS nach Zeile a verstrichen ist. In Zeile c ist der wiederholte Ablauf der Abfragezeit $\tau 1$ schematisch angedeutet, bis schließlich während einer letzten Zeitspanne $\tau 1$ keine Abweichung vom Wert Null des Syndroms mehr erfolgt ist.

Es kann nunmehr — zum Zeitpunkt T1 — die Lesedatenfreigabe erfolgen. Die Zeitspanne $\Delta T$ bis zum Zeitpunkt T2, zu dem die Lesedatenfreigabe unter Berücksichtigung der Extrembedingungen frühestens erfolgen könnte, ist der erzielte Zugriffsgewinn.

Der erste Start für den Ablauf der Überwachungszeit $\tau 1$ könnte auch gleichzeitig mit dem Eintreffen des Lesestartsignals LS erfolgen. Die Voraussetzung dafür ist aber, daß das zu diesem Zeitpunkt vorliegende Bitmuster (Lesedatensignale sind noch nicht vorhanden) nicht ein Syndrom mit dem Wert Null erzeugt. Dies kann verhindert werden, indem vor der Eingabe in den Speicher und dementsprechend nach dem Lesen einzelne Prüfbits invertiert werden. In Zeile d ist diese zweite Möglichkeit für die Überwachung des Syndroms angedeutet. Die im ersten Fall erforderliche Verzögerung $\tau 2$ des Lesestartsignals LS zur Auslösung der Überwachungsschaltung 6 durch das Verzögerungsglied 7 entfällt nun vollständig oder nahezu.

Wie die Fig. 1 zeigt, gibt die Überwachungsschaltung 6 ein Auslösesignal KF2 ab, das dann den logischen Wert 1 annimmt, wenn das Syndrom während der Abfragezeit τ1 bzw. bei i aufeinanderfolgenden Abtastungen nicht von Null abgewichen ist. In diesem Fall wird durch die Anordnung 8 das Lesedaten-Gültigkeitssignal DARDY erzeugt.

Es wurde schon erwähnt, daß die Analysier- und Decodierschaltung 5 ein von Null verschiedenes Syndrom analysiert und zur Erzeugung von Korrektursignalen decodiert, wenn die Analyse auf die Korrigierbarkeit der aufgetretenen Datenfehler hindeutet. Es hätte jedoch keinen Sinn, eine Analyse vorzunehmen bzw. ein evtl. anfallendes Analyseergebnis auszuwerten, solange das Syndrom nicht mit ausreichend hoher Wahrscheinlichkeit als stabil anzusehen ist. Zur Sicherstellung dieser Vorbedingung stehen grundsätzlich zwei Möglichkeiten zur Verfügung.

Die einfachste Möglichkeit besteht darin, die Funktion der Analysier- und Decodierschaltung 5 erst dann in Gang zu setzen, wenn mit Sicherheit alle Lesesignale an der Speichernahtstelle bzw. am Syndromgenerator 1 eingetroffen sind. Das entspricht dem Zeitpunkt T2 nach Fig. 2. Die Überbrückung der Zeitspanne τ3 zwischen dem Beginn des Lesestartsignals und dem Zeitpunkt T2 erfolgt durch das Verzögerungsglied 9. Es spielt praktisch keine Rolle, daß auf diese Weise gegebenenfalls unnötig lange Zeit bis zum Start der Korrekturmaßnahmen abgewartet wird. Ein Korrekturvorgang erfordert nämlich ohnehin verhältnismäßig viel Zeit, vor allem aber tritt dieser Fall selten ein, gemessen an der Gesamtzahl der Lesezugriffe.

Es ist auch möglich, das Syndrom analog zu den schon beschriebenen Überwachungsmaßnahmen während des Zeitraums τ1 auf irgendwelche Veränderungen zu überwachen, wobei der Zeitablauf erneut gestartet wird, wenn Veränderungen feststellbar sind. Dazu müssen die zu Beginn der Zeitspanne τ1 vorliegenden Binärwerte aller Syndrombits gespeichert und eventuelle Änderungen der Binärwerte, z. B. mit Hilfe von NOR-Gliedern durch Vergleich ermittelt werden. Dies bedeutet einen erheblichen Zuwachs an Signallaufzeit, so daß der Zeitgewinn gering und der materielle Mehraufwand unrentabel wird.

Darüber hinaus könnte auch die bereits beschriebene Überwachungseinrichtung 6, die ein Signal KF2 abgibt, wenn während der Zeitspanne τ1 oder bei i aufeinanderfolgenden Abtastungen des Syndroms keine Abweichung vom Wert Null eingetreten ist, zu der Feststellung benützt werden, daß das Syndrom während der ganzen Zeit von Null verschieden war. Allerdings würde das noch nicht bedeuten, daß das Syndrom während des Überwachungszeitraums auch wirklich stabil war. Damit wäre diese Methode zu unsicher.

Die Einleitung von Korrekturmaßnahmen (die letztlich ohnehin keine Wirkung hätten) unterbleibt selbstverständlich, wenn das Syndrom Null ist. Zu diesem Zweck dient das Signal KF2 mit dem logischen Wert 1 als Sperrsignal für die Analysier- und Decodierschaltung 5.

Wurde dagegen eine Fehlerkorrektur notwendig, dann liefert die Analysier- und Decodierschaltung 5 nach deren Abschluß eine Endesignal FKE an die Anordnung 8, die es als Lesedaten-Gültigkeitssignal DARDY weitergibt.

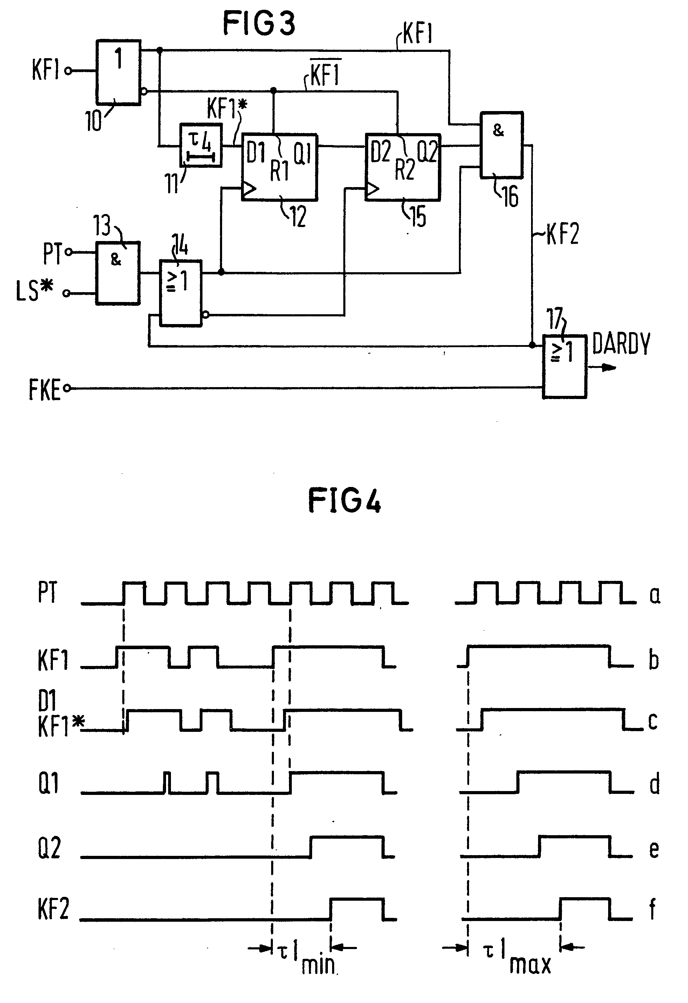

Die Fig. 3 zeigt ein Ausführungsbeispiel der Überwachungsschaltung 6 nach Fig. 1. Die Schaltungsanordnung synchronisiert das asynchrone Bewertungssignal KF1 mit einem periodischen Abfragetakt PT und blendet metastabile Zustände an Flipflops, die dabei auftreten können, aus.

Der Inverter 10 liefert zu dem Bewertungssignal KF1 noch das dazu inverse Signal $\overline{KF1}$. Das Signal KF1 gelangt nach einer durch ein Verzögerungsglied 11 hervorgerufenen Verzögerungszeit τ4 an den Informationseingang D1 eines ersten D-Flipflops 12 und wird beim Eintreffen der nächstfolgenden ansteigenden Impulsflanke des Abfragetaktes PT in das D-Flipflop 12 übernommen. Die Durchschaltung des Abfragetaktes PT wird mit Hilfe des UND-Glieds 13 entsprechend den Vereinbarungen über den erstmaligen Start der Überwachungszeit τ1 durch das im Verzögerungsglied 7 (Fig. 1) mehr oder weniger verzögerte Lesestartsignal LS* gesteuert.

Die am Ausgang Q1 des ersten F-Dlipflops 12 anliegende Information wird durch die folgende abfallende Impulsflanke des Abfragetaktes PT, die am invertierenden Ausgang des ODER-Glieds 14 wieder als ansteigende Impulsflanke erscheint, in ein zweites D-Flipflop 15 übernommen. Der Ausgang Q2 des zweiten D-Flipflops 15 ist mit einem Eingang eines UND-Glieds 16 verbunden, an dessen weiteren Eingängen das Bewertungssignal KF1 und der Abfragetakt PT anliegen. Mit einem erneuten Impuls des Abfragetaktes PT entsteht am Ausgang des UND-Glieds 16 das Signal KF2, das die Einhaltung des Wertes Null des Syndroms während der Abfragezeit τ1 kennzeichnet. Das Signal KF2 durchläuft das ODER-Glied 17 und bildet an dessen Ausgang das Lesedaten-Gültigkeitssignal DARDY. Das Signal KF2 hält sich über das ODER-Glied 14 und das UND-Glied 16 unabhängig von dem augenblicklichen Zustand des Abfragetaktes PT solange selbst, bis das Bewertungssignal KF1 infolge eines erneuten Lesezugriffs verschwindet. Gleichzeitig werden die Flipflops 12 und 15 zurückgestellt. Wie aus Fig. 3 unmittelbar ersichtlich ist, führt das Korrekturendesignal FKE alternativ zur Erzeugung des Lesedaten-Gültigkeitssignals DARDY.

Die vorstehende Beschreibung der Überwachungsschaltung nach Fig. 3 setzt voraus, daß das Syndrom von einem bestimmten Zeitpunkt ab bis zu einem erneuten Lesezugriff nicht mehr von dem Wert Null abgewichen ist. Tatsächlich wird diese Annahme im allgemeinen zunächst nicht erfüllt sein. Vielmehr ist anzunehmen, daß der Wert des Syndroms mehrmals zwischen Null und ungleich Null wechselt, ehe der Wert Null stabil wird. Der Ablauf der Überwachungszeit τ1 muß

dann immer neu beginnen. Zur Erleichterung der Übersicht über dabei entstehende Vorgänge wird für das weitere auf das Zeitdiagramm nach Fig. 4 verwiesen, das den zeitlichen Verlauf des Abfragetaktes PT, des Bewertungssignals KF1, des am Informationseingang D1 des ersten Flipflops 12 anliegenden und durch Verzögerung aus dem Bewertungssignal KF1 abgeleiteten Signals KF1*, des Ausgangssignals am Ausgang Q1 des ersten Flipflops 12, des Ausgangssignals am Ausgang Q2 des zweiten Flipflops 15 und des Freigabesignals KF2 zeigt.

Der Abfragetakt PT besitzt eine Periodendauer $t_p$, die für die Bemessung der Überwachungszeit $\tau1$ eine wichtige Rolle spielt, wie noch zu sehen sein wird. Das Bewertungssignal KF1 hat während der Phase, in der die Lesedatensignale nach und nach am Syndromgenerator 1 (Fig. 1) eintreffen, einen rein zufälligen Verlauf. Insbesondere finden die Änderungen dieses Signals völlig asynchron statt. Der Verlauf des Bewertungssignals KF1 im Zeitdiagramm nach Fig. 4 konnte daher willkürlich angenommen werden. Der erste Übergang des Bewertungssignals KF1 vom logischen Wert « Null » auf den logischen Wert « 1 » liegt kurz vor einer ansteigenden Flanke des Abfragetaktes PT, der entsprechende Übergang des verzögerten Signals KF1* am Informationseingang D1 dagegen kurz nach der ansteigenden Taktflanke. Bei der nachfolgenden ansteigenden Taktflanke wird das erste Flipflop 12 zwar gesetzt, aber umgehend wieder zurückgesetzt, weil das Bewertungssignal KF1 wieder verschwindet (KF1→1). Am Ausgang G1 des ersten Flipflops 12 entsteht daher nur ein kurzer Impuls, der nicht zum Setzen des zweiten Flipflops 14 führt, da während der Dauer des Impulses keine abfallende Flanke des Abfragetaktes PT entstanden ist. Ein analoges Ergebnis tritt ein, wenn das Bewertungssignal KF1 ein zweites Mal den logischen Wert « 1 » annimmt.

Der dritte Übergang des Bewertungssignals KF1 von « 0 » auf « 1 » ist so vor eine ansteigende Flanke des Abfragetaktes PT gelegt, daß der entsprechende Übergang des im Verzögerungsglied 11 um weniger als eine halbe Taktperiode verzögerten Signals KF1* am Eingang D1 des ersten Flipflops 12 gerade eben noch vor dem Taktflankenanstieg erfolgt. Die Übernahme in das erste Flipflop 12 geschieht somit unverzüglich. Nach einer weiteren halben Taktperiode wird das zweite Flipflop 15 gesetzt, da das Bewertungssignal KF1 immer noch den logischen Wert « 1 » einnimmt. Nochmals eine halbe Taktperiode später entsteht das Freigabesignal KF2, das unmittelbar das Lesedaten-Gültigkeitssignal DARDY zur Folge hat. Das Freigabesignal KF2 hält sich aufgrund der Rückführung über das ODER-Glied 14 (Fig. 3) selbst, bis das Bewertungssignal KF1 verschwindet. Sodann werden auch die beiden Flipflops 12 und 15 zurückgesetzt.

Die Zeitspanne zwischen dem Entstehen des Bewertungssignals KF1 und dem daraus resultierenden Beginn des Freigabesignals KF2 ist aufgrund der zuletzt vorausgesetzten zeitlichen Beziehung zwischen dem Bewertungssignal KF1 und dem Abfragetakt PT die kürzestmögliche Überwachungszeit $\tau1_{min}$. Sie ergibt sich zu

$$\tau1_{min} = t_p + \tau4$$

und soll bei einem 8 Bits umfassenden Syndrom etwa 15 Nanosekunden betragen. Setzt man als Verzögerungszeit $\tau4$ etwa ein Drittel der Taktperiode $t_p$ an, dann muß die Taktperiode $t_p$ etwa 12 Nanosekunden betragen.

In dem letzten Abschnitt des Zeitdiagramms nach Fig. 4, der keine Fortsetzung des vorausgehenden Abschnitts sein soll, ist angenommen, daß das Bewertungssignal KF1 in bezug auf den Abfragetakt PT etwas später als vorher entsteht. Das um die Zeit $\tau4$ verzögerte Bewertungssignal KF1* möge am Eingang D1 des ersten Flipflops 12 knapp nach einer ansteigenden Flanke des Abfragetaktes PT eintreffen. Bis zur Übernahme in das erste Flipflop 12 vergeht dann nahezu eine volle Taktperiode $t_p$. Wie im vorhergehenden Beispiel dauert es dann nochmals eine weitere Taktperiode $t_p$, bis das Freigabesignal KF2 entsteht. Seit dem Übergang des Bewertungssignals KF1 von dem logischen Wert « 0 » auf den logischen Wert « 1 » bis zur Entstehung des Freigabesignals KF2 ist in dem angenommenen Fall die maximale Überwachungszeit $\tau1_{max}$ mit

$$\tau1_{max} = 2 t_p + \tau4$$

vergangen. Mit den vorher genannten Werten ergibt sich nun $\tau1_{max}$ zu ungefähr 28 Nanosekunden. Die Periodendauer des Abfragetaktes PT kann etwa auf die Hälfte reduziert werden, wenn anstelle von acht Prüfbits fünfzehn vorgesehen werden.

Liste der Bezugszeichen

1 Syndromgenerator
2,2a,3 Leitungsbündel
4 Nulldetektor
5 Analysier- und Decodierschaltung
7,9,11 Laufzeitglied
8 Anordnung zur Erzeugung des Lesedaten-Gültigkeitssignals
10 Inverter
12,15 Flipflop
13,16 UND-Glied
14,17 ODER-Glied
KF1 Bewertungssignal
KF1 inverses Bewertungssignal
KF1* verzögertes Bewertungssignal
KF2 Freigabesignal
FKE Korrektur-Endesignal
DARDY Lesedaten-Gültigkeitssignal
PT Abfragetakt
LS Lesestartsignal
6 Überwachungsschaltung

**Ansprüche**

1. Verfahren zur automatischen Anpassung der zwischen dem Beginn eines Lesestartsignals und der Freigabe eines Lesedatums erforderlichen Zeitspanne beim Lesen von Datenwörtern aus einem Speicher mit wahlfreiem Zugriff in Abhängigkeit von der für jeden einzelnen Lesezugriff maßgebenden Summe der maximalen Signallaufzeiten für das Lesestartsignal und für die Bits des Datenworts, mit Hilfe einer Fehlerkorrektureinrichtung, die durch Vergleich der beim Einschreiben eines Datenworts abgeleiteten Prüfbits mit den beim Lesen desselben Datenworts erneut abgeleiteten Prüfbits ein Syndrom erzeugt und entsprechend dem Wert des Syndroms ein Freigabesignal umgehend oder nach der Korrektur eines fehlerhaften, jedoch korrigierbaren Lesedatums ausgibt oder die Nichtkorrigierbarkeit feststellt, dadurch gekennzeichnet, daß der Wert des jeweils erzeugten Syndroms während einer vorgegebenen Überwachungszeitspanne ($\tau$1) überwacht wird, wobei die Überwachungszeitspanne erneut beginnt, wenn sich der Wert des Syndroms vor dem Ablauf einer Überwachungszeitspanne geändert hat, und daß das Lesedatum als gültig erklärt wird, wenn der Wert des Syndroms während einer Überwachungszeitspanne ($\tau$1) nicht mehr von null abgewichen ist.

2. Verfahren nach Anspruch 1, dadurch gekennzeichnet, daß ein den Wert Null des Syndroms kennzeichnendes Bewertungssignal (KF1) in ein durch einen Abfragetakt (PT) vorgegebenes Taktraster eingeordnet wird, wobei die Periodendauer ($t_p$) des Abfragetaktes (PT) die Überwachungszeitspanne ($\tau$1) wesentlich mitbestimmt.

3. Anordnung zur Durchführung des Verfahrens nach Anspruch 1 oder 2, mit einem Nulldetektor (4) zur Erzeugung eines den Wert Null des Syndroms kennzeichnenden Bewertungssignals (KF1), dadurch gekennzeichnet, daß eine Überwachungsschaltung (6) vorgesehen ist, die nach einer durch ein Laufzeitglied (7) verursachten Verzögerungszeit ($\tau$2) gegenüber dem Beginn eines einen Lesezyklus auslösenden Lesestartsignals (LS) wirksam wird und ein Freigabesignal (KF2) abgibt, wenn das Bewertungssignal (KF1) während der Überwachungszeitspanne ($\tau$1) nicht von dem logischen Wert 1 abgewichen ist, und daß ein Verknüpfungsglied (8, 17) zur alternativen Verknüpfung des Freigabesignals (KF2) oder eines den erfolgreichen Abschluß der Korrektur eines fehlerbehafteten Datenworts anzeigenden Signals (FKE) vorgesehen ist.

4. Anordnung nach Anspruch 3, dadurch gekennzeichnet, daß die Überwachungsschaltung (6) ein erstes und zweites taktflankengesteuertes und durch das invertierte Bewertungssignal (KF1) rücksetzbares D-Flipflop (12, 15) enthält, daß das Bewertungssignal (KF1) über ein Laufzeitglied (11) dem Informationseingang (D1) des ersten Flipflops (12) zugeführt wird, daß der Ausgang (Q1) des ersten D-Flipflops (12) mit dem Informationseingang (D2) des zweiten D-Flipflops verbunden ist, daß die Informationsübernahme in das erste D-Flipflop (12) durch eine ansteigende Flanke des Abfragetaktes (PT) und die Informationsübernahme in das zweite D-Flipflop (15) durch eine ansteigende Flanke des invertierten Abfragetaktes erfolgt und daß zur Erzeugung des Freigabesignals (KF2) ein erstes ODER-Glied (16) dient, an dessen Eingängen das Bewertungssignal (KF1), das Ausgangssignal des zweiten D-Flip-flops (15) und der Abfragetakt (PT) anliegen.

5. Anordnung nach Anspruch 4, dadurch gekennzeichnet, daß ein weiteres ODER-Glied (14) mit einem zusätzlichen invertierenden Ausgang vorgesehen ist, an dessen Eingängen der Abfragetakt (PT) und das Freigabesignal (KF2) anliegen, daß der nichtinvertierende Ausgang mit dem Takteingang des ersten D-Flipflops (12) und mit einem der Eingänge des ersten ODER-Glieds (16) zur Erzeugung des Freigabesignals (KF2) verbunden ist und daß der invertierende Ausgang des zweiten ODER-Glieds (14) mit dem Takteingang des zweiten D-Flipflops (15) verbunden ist.

**Claims**

1. Method for automatically adapting the interval of time required between the beginning of a read-start signal and the release of an item of read data during the readout of data words from a RAM in dependence upon the sum — which governs each individual read access — of the maximum signal transit times for the read-start signal and for the bits of the data word, with the assistance of an error correcting device which generates a syndrome by comparing the test bits obtained during the input of a data word with the test bits which are again obtained during the read-out of the same data word and, in accordance with the value of the syndrome, emits a release signal immediately or following the correction of an erroneous yet correctable item of read data, or else establishes non-correctability, characterised in that the value of the generated syndrome is monitored for a predetermined monitoring period ($\tau$1), where the monitoring period recommences when the value of the syndrome has changed before the expiration of a monitoring period, and that the item of read data is declared valid when the value of the syndrome has not deviated from zero during a monitoring period ($\tau$1).

2. Method as claimed in claim 1, characterised in that an evaluation signal (KF1) which characterises the zero value of the syndrome is arranged in a pulse pattern which is predetermined by an interrogation pulse train (PT), where the period duration ($t_p$) of the interrogation pulse train (PT) fundamentally codetermines the monitoring period ($\tau$1).

3. Arrangement for the implementation of the method claimed in claim 1 or 2, having a zero detector (4) which serves to produce an evaluation signal (KF1) which characterises the zero value of the syndrome, characterised in that a monitoring circuit (6) is provided which becomes operative following a delay time (τ2), produced by a delay element (7), relative to the beginning of a read-start signal (LF) which triggers a read cycle, and which emits a release signal (KF2) when the evaluation signal (KF1) has not deviated from the logic value one during the monitoring period (τ1), and that a logic linking element (8,17) is provided for the alternative logic-linking of the release signal (KF2) or of a signal (SKE) which indicates the successful conclusion of the correction of an erroneous data word.

4. Arrangement as claimed in claim 3, characterised in that the monitoring circuit (6) contains a first and a second edge triggered D-flip-flop (12, 15) which can be reset by the inverted evaluation signal (KF1), that the evaluation signal (KF1) is fed via a delay element (11) to the data input (D1) of the first flip-flop (12), that the output (Q1) of the first D-flip-flop (12) is connected to the data input (D2) of the second D-flip-flop, that the data transfer into the first D-flip-flop (12) is carried out by a rising flank of the interrogation pulse train (PT) whereas the data transfer into the second D-flip-flop (15) is carried out by a rising flank of the inverted interrogation pulse train, and that the release signal (KF2) is produced by a first OR gate (16) whose inputs are connected to the evaluation signal (KF1), the output signal of the second D-flip-flop (15), and the interrogation pulse train (PT).

5. Arrangement as claimed in claim 4, characterised in that a further OR gate (14) is provided which possesses an additional inverting output and whose inputs are connected to the interrogation pulse train (PT) and to the release signal (KF2), that the non-inverting output is connected to the clock pulse input of the first D-flip-flop (12) and to one of the inputs of the first OR gate (16) for the production of the release signal (KF2), and that the inverting output of the second OR gate (14) is connected to the clock pulse input of the second D-flip-flop (15).

## Revendications

1. Procédé pour adapter automatiquement l'intervalle de temps nécessaire entre le début d'un signal de démarrage de la lecture et de poursuite du traitement d'une date de lecture lors de la lecture de mots de données dans une mémoire à accès aléatoire en fonction de la somme, déterminante pour chaque accès de lecture individuel, des durées maximales de transit des signaux pour le signal de démarrage de la lecture et pour les bits du mot de données, à l'aide d'un dispositif de correction d'erreur qui produit, par comparaison des bits de contrôle dérivés lors de l'inscription d'un mot de données, avec les bits de contrôle dérivés à nouveau lors de la lecture du même mot de données, un syndrome et émet en fonction de la valeur du syndrome un signal de poursuite du traitement, immédiatement ou après la correction d'une date de lecture défectueuse mais encore susceptible d'être corrigée, ou constate la non possibilité de correction, caractérisé par le fait que la valeur de chaque syndrome produit est surveillée pendant un intervalle de temps de surveillance (τ1) prédéterminé, cet intervalle de temps de surveillance recommençant si la valeur du syndrome s'est modifiée avant la fin d'un intervalle de temps de surveillance, et que la date de lecture est déclarée valable si la valeur du syndrome ne s'est plus écartée de zéro pendant un intervalle de temps de surveillance (τ1).

2. Procédé selon la revendication 1, caractérisé par le fait qu'un signal de pondération (KF1), qui caractérise la valeur nulle du syndrome, est classé dans une trame de cadence prédéterminée par une cadence d'interrogation (PT), la durée de la période $(t_p)$ de la cadence d'interrogation (PT) participant de façon notable à la détermination de l'intervalle de temps de surveillance (τ1).

3. Dispositif pour la mise en œuvre du procédé selon la revendication 1 ou 2, avec un détecteur de zéro (4) pour produire un signal de pondération (KF1) qui caractérise la valeur nulle du syndrome, caractérisé par le fait qu'il est prévu un circuit de surveillance (6) qui devient efficace après une durée de retard (τ2), due à une ligne de retard, par rapport au début d'un signal de démarrage de lecture (LS) déclenchant un cycle de lecture, et qui émet un signal de poursuite du traitement (KF2) lorsque le signal de pondération (KF1) ne s'est pas écarté de la valeur logique 1 pendant l'intervalle de temps de surveillance (τ1), et qu'il est prévu un circuit logique (8, 17) pour la combinaison logique alternative du signal de poursuite du traitement (KF2) ou d'un signal (FKE) qui signale l'exécution réussie de la correction d'un mot de données défectueux.

4. Dispositif selon la revendication 3, caractérisé par le fait que le circuit de surveillance (6) comporte un premier et un second multivibrateur bistable de type D (12, 15) commandé par le flanc de la cadence et susceptible de remise à l'état initial par le signal de pondération inversé (KF1), que le signal de pondération (KF1) est appliqué, par l'intermédiaire d'une ligne à retard (11) à l'entrée d'information (D1) du premier multivibrateur bistable (12), que la sortie (Q1) du premier multivibrateur bistable D (12) est reliée à l'entrée d'information (D2) du second multivibrateur bistable D (15), que la prise en charge de l'information dans le premier multivibrateur bistable D (12) a lieu par un flanc croissant de la cadence d'interrogation (PT) et la prise en charge de l'information dans le second multivibrateur D (15) a lieu par le flanc croissant de la cadence d'interrogation inversée (KF2), et que pour la production du signal de poursuite du traitement (KF2), on utilise un premier circuit OU (16) aux entrées duquel sont appliqués le signal de pondération (KF1), le signal de sortie du second multivibrateur D (15) et la cadence d'interrogation (PT).

5. Dispositif selon la revendication 4, caractérisé par le fait qu'il est prévu un circuit OU supplémentaire (14) à sortie inverseuse supplémentaire, aux entrées duquel sont appliqués la cadence d'interrogation (PT) et le signal de poursuite du traitement (KF2), que la sortie non inverseuse est reliée à l'entrée de cadence du premier multivibrateur D (12) et à l'une des entrées du premier circuit OU (16) pour la production du signal de libération (KF2) et que la sortie inverseuse du second circuit OU (14) est reliée l'entrée de cadence du second multivibrateur D (15).

# FIG1

# FIG2

# FIG 3

# FIG 4